# EUROPÄISCHE PATENTANMELDUNG

(11) **EP 2 146 112 A1**
(43) Veröffentlichungstag der Anmeldung: **20.01.2010**
(21) Anmeldenummer: 08160358.1
(22) Anmeldetag: 14.07.2008
(51) Int. Cl.: F16H 3/66, F16H 57/08

(54) **Wolfrom-Planetengetriebe**

(71) Anmelder: Tribecraft AG, 8092 Zürich (CH)
(72) Erfinder: Werner, Uwe, 8142 Uitikon Waldegg (CH); Günthart, Matthias, 5000 Aarau (CL); Eggert, Dominik, 8050 Zürich (CH)
(74) Vertreter: Liebetanz, Michael

(57) **Zusammenfassung**

Ein Wolfromgetriebe verfügt über zwei axial benachbarte erste und zweite Hohlräder (50, 71) und mindestens zwei Planetenstangen (121, 122, 123). Die Planetenstangen kämmen mit einem ersten axialen Bereich (31) in einem innerhalb des Getriebegehäuses festsetzbaren ersten Hohlrad (50) und mit einem zweiten axialen Bereich (33) in dem drehbaren zweiten Hohlrad (71), wobei ein oder mehrere Abschnitte (31, 32, 33, 34) der Planetenstangen mit einem Sonnenrad (11) kämmen. Dabei weisen die Planetenstangen (121, 122, 123) einen dritten axialen Bereich (32) auf, der mit einem dritten Hohlrad (40) kämmt. Es sind zusätzlich Schaltmittel (60) vorgesehen, um das dritte Hohlrad (40) alternativ zu dem ersten Hohlrad (50) gegenüber dem Getriebegehäuse drehfest festzusetzen.

## Beschreibung

### Technisches Gebiet der Erfindung

Die Erfindung betrifft ein Wolfrom-Planetengetriebe mit den Merkmalen des Oberbegriffs des Anspruchs 1. Es verfügt über einen Antriebskörper und einen Abtriebskörpers mit zwei axial benachbarten Hohlrädern und mit mindestens zwei Planetenstangen, wobei die Planetenstangen mit einem ersten axialen Bereich in einem innerhalb des Getriebegehäuses feststehenden Hohlrad und mit einem zweiten axialen Bereich in einem drehbaren Hohlrad kämmen und wobei ein Abschnitt der Planetenstangen mit einem Sonnenrad kämmt.

### Technischer Hintergrund der Erfindung

Aus dem Stand der Technik sind eine Reihe von Wolfrom-Planetengetriebe bekannt. So sind verschiedene Ausgestaltungen von Wolfromgetrieben aus der DE 42 24 850, EP 0 676 560, EP 0 678 688 und EP 1 244 880 bekannt. Durch die Wahl der Zähnezahlen der verschiedenen Räder sind verschiedenste Übersetzungszahlen einstellbar. Im Stand der Technik besteht das Bedürfnis, ein solches Getriebe schaltbar auszugestalten. Hierfür ist eine Lösung aus der DE 197 50 239 bekannt. Dieses schaltbare Getriebe mit zwei Schaltstellungen umfasst eine erste Schaltstellung mit einem besonders hohen Übersetzungsverhältnis, welches nach dem Wolfrom-Prinzip arbeitet. In der zweiten Schaltstellung arbeitet das Getriebe als einfaches Planetengetriebe. Bei der EP 1 244 880 ist ein Umlaufträger in die Planetenstangen einsteckbar, um eine Grob- und eine Feineinstellung zu erreichen.

### Zusammenfassung der Erfindung

Ausgehend von diesem Stand der Technik liegt der Erfindung die Aufgabe zugrunde, ein vollständig als Wolfromgetriebe ausgestaltetes schaltbares Getriebe anzugeben.

Dabei ist ein Ziel der Erfindung, eine kürzere Bauweise als bekannte reine Planetengetriebe zu erzielen. Ein weiteres Ziel der Erfindung ist die Reduktion der Bauteile, um neben geringeren Bauteilkosten auch geringere Montagekosten zu erreichen.

Diese Aufgabe wird erfindungsgemäss mit den Merkmalen des Anspruchs 1 gelöst.

Dadurch, dass bei einem Getriebe nach dem Oberbegriff des Anspruchs 1 nun die Planetenstangen einen dritten axialen Bereich aufweisen, der mit einem dritten Hohlrad kämmt, wobei mindestens zwei der Hohlräder eine unterschiedliche Zähnezahl besitzen, die in bevorzugten Ausführungsbeispiel einen geringfügigen Unterschied ausmachen. Dazu sind nun Schaltmittel vorgesehen, um das dritte Hohlrad alternativ zu dem ersten Hohlrad gegenüber dem Getriebegehäuse drehfest festzusetzen. Diese Schaltmittel dienen also zum Schalten zwischen zwei schaltbaren Hohlrädern, während das andere der beiden Hohlräder in eine Freilaufposition schaltbar ist.

Durch das Konzept gemäss der Erfindung ist bei dem schaltbaren Getriebe keine Umlenkung des Kraftflusses erforderlich, wie es bei Planetengetrieben zwischen den Planeten der einen Stufe auf die Sonne einer benachbarten Stufe erforderlich ist.

Die Planetenstangen bildenden die durchgehenden Planetenräder, die zwischen Sonne und Hohlrädern eingelegt sind. Es sind dabei keine Planetenträger für die Lagerung erforderlich, da die beispielsweise vier Planeten durch ihre Länge selber genügend gut gelagert werden.

Weitere vorteilhafte Ausführungsformen sind in den Unteransprüchen gekennzeichnet.

### Kurze Beschreibung der Zeichnungen

Die Erfindung wird nun beispielhaft an Hand von Ausführungsbeispielen näher beschrieben. Es zeigen:
Fig. 1 eine perspektivische Explosionsansicht eines zweigängigen Getriebes gemäss einem ersten Ausführungsbeispiel der Erfindung;
Fig. 2 eine perspektivische Explosionsansicht eines anderen zweigängigen Getriebes gemäss einem zweiten Ausführungsbeispiel der Erfindung;
Fig. 3 eine perspektivische teilweise geschnittene Ansicht eines dreigängigen Getriebes gemäss einem dritten Ausführungsbeispiel der Erfindung;
Fig. 4 eine perspektivische teilweise geschnittene Ansicht eines dreigängigen Getriebes gemäss einem vierten Ausführungsbeispiel der Erfindung;
Fig. 5 eine schematische Darstellung von zwei Schaltpositionen eines Getriebes gemäss einem Ausführungsbeispiel der Erfindung;
Fig. 6 eine schematische Darstellung von zwei Schaltpositionen eines Getriebes gemäss einem Ausführungsbeispiel der Erfindung mit geteilter Sonne;
Fig. 7 eine schematische Darstellung der drei Schaltpositionen eines dreigängigen Getriebes gemäss einem Ausführungsbeispiel der Erfindung; und
Fig. 8 eine schematische Darstellung von links- beziehungsweise rechtsdrehendem Abtrieb gemäss einem weiteren Ausführungsbeispiel der Erfindung.

### Ausführliche Beschreibung von beispielhaften Ausführungsbeispielen

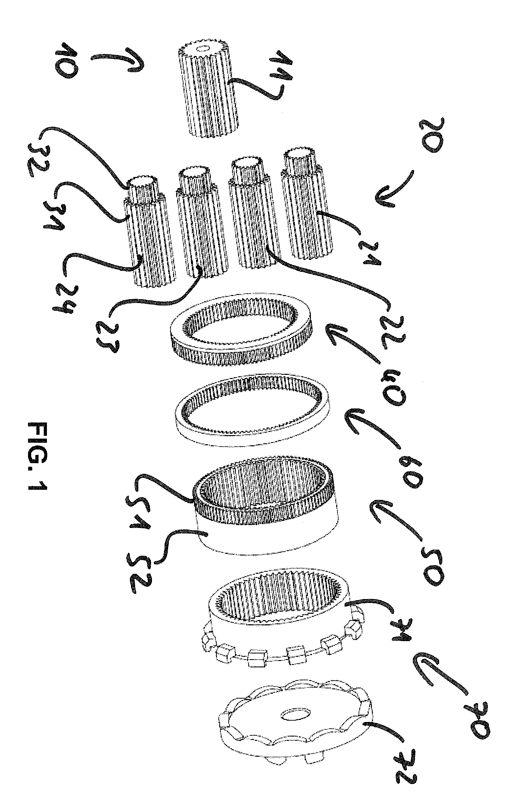

Die Fig. 1 zeigt eine perspektivische Explosionsansicht eines Getriebes gemäss einem ersten Ausführungsbeispiel der Erfindung, welches ein zweistufiges Getriebe darstellt. Es besteht aus insgesamt nur zehn Einzelteilen, wobei keine vormontierten Baugruppen erforderlich sind.

Der Antriebskörper 10 ist beispielsweise an einem Motor angesetzt. Der Antriebskörper 10 besteht aus einem Sonnenrad 11 als zentralem Antriebsrad, welches über einen antriebsseitigen Anschluss mit dem besagten Motor verbunden ist. Dieses Sonnenrad 11 kämmt mit der Planeteneinheit 20, die aus hier vier Planetenstangen 21, 22, 23, 24 besteht. Die Planetenstangen 21, 22, 23, 24 des ersten Ausführungsbeispiels verfügen über zwei unterschiedliche Planetenradabschnitte: jeweils über einen ersten Antriebsabschnitt 31 mit grösserem Durchmesser, der mit dem Antriebsrad 10 im Eingriff steht und einen im Durchmesser kleineren gezahnten Abschnitt 32.

Mit dem Bezugszeichen 50 ist ein erstes Hohlrad bezeichnet, welches mit seiner inneren Verzahnung mit den Planetenradabschnitten 31 im Eingriff steht. Das erste Hohlrad 50 weist an der Aussenseite hier einen Bereich 51 mit Aussenverzahnung und einen zweiten Bereich 52 ohne Aussenverzahnung auf. Der Bereich 52 ist dabei optional.

Mit dem Bezugszeichen 40 ist ein zweites Hohlrad bezeichnet, welches mit seiner inneren Verzahnung mit den Planetenradabschnitten 32 im Eingriff steht.

Beide Aussenverzahnungen 51 und 41 sind identisch und können mit einem axial verschiebbaren Schaltring 60 im Eingriff stehen. Der Schaltring 60 ist gegen Rotation gesichert.

Schliesslich besteht ein mit den Planetenstangen 21, 22, 23 und 24 im Eingriff stehender Abtriebsring oder Abtriebshohlrad 71, das zusammen mit dem Abtriebsflansch 72 den Abtriebkörper 70 bildet.

Der Schaltring 60 greift in zwei identische Aussenverzahnungen 41 beziehungsweise 51 der Hohlräder 40 und 50 ein. Die Blockade des Schaltrings 60 zur Drehmomentabstützung ist dagegen nicht dargestellt. Die optionale Zweiteiligkeit des Abtriebskörpers 70 erleichtert die Montage, gestattet die Realisierung einer Überlastkupplung und könnte auch einstückig ausgeführt sein.

Bei dem hier dargestellten Getriebe liegt ein langsamer Gang mit einem Übersetzungsverhältnis von ungefähr 1:60 vor, während der schnellere Gang eines von ungefähr 1:17 aufweist.

Es ist klar, dass jeweils ein Hohlrad 40 leer mitdreht. Durch die Länge des Abschnittes 31 der Planetenräder 21, 22, 23, 24 fällt die Abwesenheit eines Planetenträgers nicht auf. In einer bevorzugten Ausführung sind lediglich das Sonnenrad 11 und der Abtrieb 70 gelagert.

Das zweite Hohlrad 40 und der erste Abschnitt 31 der Planetenräder 21, 22, 23, 24 können gegenüber dem zweiten Abschnitt 32 und den zugehörigen Rädern unterschiedliche Module aufweisen. Die Module können in anderen Ausführungsbeispielen auch gleich sein.

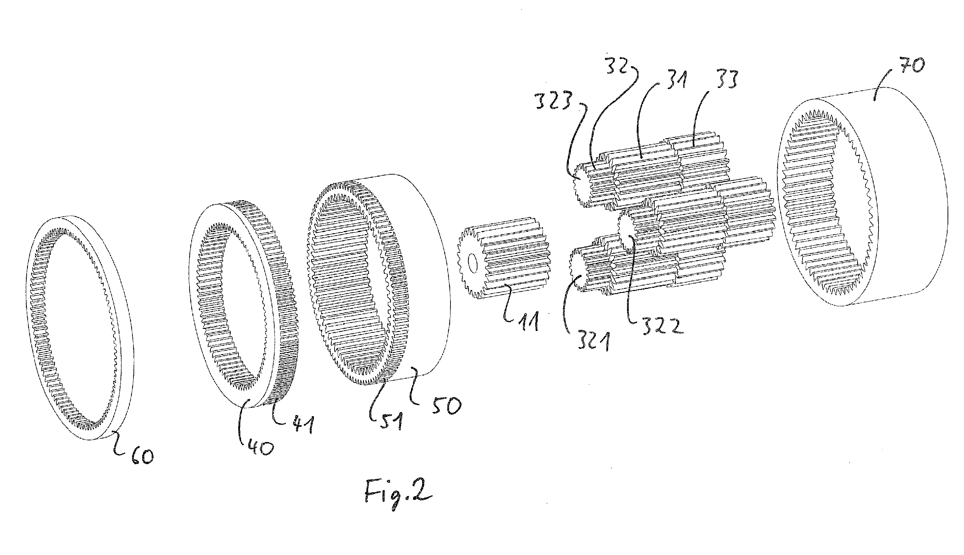

Die Fig. 2 zeigt eine perspektivische Explosionsansicht eines weiteren Getriebes gemäss einem zweiten Ausführungsbeispiel der Erfindung, welches ebenfalls ein zweigängiges Getriebe darstellt, wobei drei Planetenstangen 321, 322 und 323 in einem Winkel von 120 Grad zueinander um das Sonnenrad 11 angeordnet sind, welches Sonnenrad 11 nur mit dem Planetenradabschnitt 31 der Stangen 321, 322 und 323 kämmt. Diese weisen jeweils die aus dem ersten Ausführungsbeispiel bekannten Planetenradabschnitte 31, 32 und 33 auf. Alle anderen Bauteile entsprechen denen des ersten Ausführungsbeispiels und haben dieselben Bezugszeichen erhalten. Gleiche Merkmale sind in allen Ausführungsbeispielen mit denselben Bezugszeichen versehen worden.

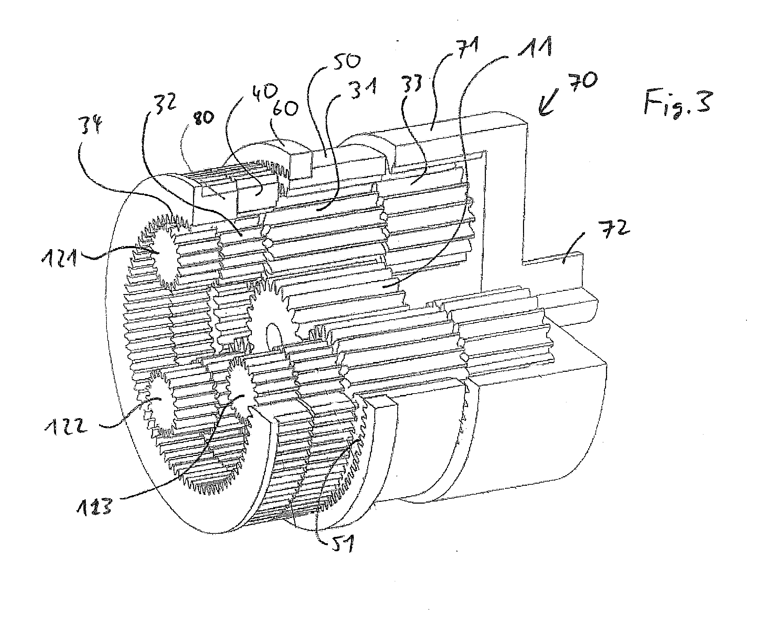

Die Fig. 3 zeigt eine perspektivische teilweise geschnittene Ansicht eines dreistufigen Getriebes gemäss einem dritten Ausführungsbeispiel der Erfindung.

Der Abtriebskörper 70 ist einstückig ausgestaltet, so dass Abtriebshohlrad 71 und Abtriebsflansch 72 ineinander übergehen. Zentral angeordnet ist das Sonnenrad 11. In diesem Ausführungsbeispiel sind drei vierteilige Planetenstangen 121, 122 und 123 vorgesehen. Die Planetenstangen 121, 122 und 123 sind wie die Planetenstangen 21, 22, 23 und 24 des ersten Ausführungsbeispiels vorzugsweise einstückig hergestellt; sie können aber auch einzeln hergestellt und dann für den Einsatz fix miteinander verbunden werden, beispielsweise durch Verkleben, Verschweissen oder einen Formschluss. Es bestehen hier die aus dem ersten Ausführungsbeispiel bekannten Planetenradabschnitte 31 und 32, sowie die Planetenradabschnitte 33 und 34 auf die hier besonders eingegangen wird.

Da ist zuerst der Abtriebs-Planetenradabschnitt 33, der mit dem Abtriebshohlrad 71 kämmt. Dieser ist anders als im ersten Ausführungsbeispiel nicht identisch zum ersten Planetenradabschnitt 31 ausgeführt. Beim dargestellten Beispiel sind die Innenverzahnungen der Hohlräder 71 und 50 nicht identisch. Wenn die Planetenradabschnitte 31 und 33 verschieden sind, können die Innenverzahnungen auch identisch sein. Diese allgemeine Auslegung der Planetenstangen ist natürlich auch beim zweistufigen Getriebe nach Fig. 1 einsetzbar.

Weiter besteht ein weiterer Planetenradabschnitt 34, der an dem zweiten Planetenradabschnitt 32 angrenzt. Dieser weitere Planetenradabschnitt 34 gestattet es, das Getriebe dreigängig auszugestalten.

Der erste Planetenradabschnitt 31 kämmt mit dem ersten Hohlrad 50 und der zweite Planetenradabschnitt 32 kämmt mit dem zweiten Hohlrad 40 wie beim ersten Ausführungsbeispiel. Zusätzlich kämmt das weitere Hohlrad 80 mit dem weiteren Planetenradabschnitt 34.

Die Aussenverzahnungen der Hohlräder 40, 50 und 80 sind identisch und für einen sie festlegenden Eingriff mit dem Schaltring 60 ausgelegt. In der Fig. 3 greift der Schaltring in die Aussenverzahnung 51 des ersten Hohlrades 50 ein.

Alle vier Planetenradabschnitte 31, 32, 33 und 34 sind beim Ausführungsbeispiel der Fig. 3 jeweils anders ausgelegt. Ein Unterschied muss jedenfalls zwischen den Planetenradabschnitten 31, 32, 33 bestehen; der Planetenradabschnitt 34 kann identisch zu einem der drei anderen Planetenradabschnitte 31, 32, 33 ausgestaltet sein. Es können auch mehr als zwei Planetenradabschnitte identisch sein.

Das Sonnenrad 11 kämmt in den Ausführungsbeispielen jeweils mit dem ersten Abschnitt 31; es kann aber mit einem vorbestimmten, einem beliebigen der Hohlräder 40, 50, 70 oder 80 zugeordneten Abschnitt 31 bis 34 der Planetenstangen kämmen. Es kann auch mit mehreren Abschnitten 31 bis 34 der Planetenstangen kämmen, wobei sich die Lagerung verbessert.

Das dreigängige Getriebe nach Fig. 3 setzt drei Planetenstangen 121, 122, 123 ein. Die Anzahl der Planetenstangen kann bei allen Ausführungsbeispielen ab zwei aufwärts gewählt werden, wobei drei und vier Planetenstangen bevorzugt sind. Die Planetenstangen können zusätzlich mit einem Planetenträger gelagert werden.

Die Auslegung der Zahnradelemente können beispielsweise so gewählt werden, dass Untersetzungen im schnellen Gang zwischen 1:10 und 1:25 und im langsamen Gang von 1:50 zu 1:80 vorliegen.

Die Module des ersten Hohlrades 50, des grösseren ersten Planetenradabschnittes 31 und des Sonnenrades 11 müssen gleich sein. Die Module des zweiten Hohlrades 40 und des kleineren zweiten Planetenradabschnittes 32 müssen gleich sein. Mit anderen Worten, je Stufe des Getriebes als Zusammenspiel von Planetenstangenabschnitt und Hohlrad müssen die Teile das gleiche Modul aufweisen.

Zur Realisierung beliebiger Übersetzungsverhältnisse können unterschiedliche Planetenstangen gewählt werden.

Das Hohlrad 71, vorzugsweise ein an einem Ende des Getriebes vorgesehenes Hohlrad, ist mit dem Abtrieb 70 verbunden oder überträgt an diesen ein Drehmoment.

Für die Verdrehsicherung ist in den Ausführungsbeispielen jeweils ein Schaltring 60 vorgesehen, der zur Momentenabstützung eines der anderen Hohlräder 40, 50 oder 80 dient. In, in den Figuren nicht gezeigten anderen Ausführungsbeispielen, kann dies beispielsweise auch ein am Getriebegehäuse vorgesehener Stift sein oder es können mehrere entsprechend alternativ betätigbare Stifte sein. Solch ein Stift greift dann in eine entsprechende Ausnehmung auf den Hohlrädern 40, 50 oder 80 ein und blockiert jeweils eines in seiner Drehung. Dem Fachmann sind auch andere Ausführungen geläufig. Neben der Realisierung der Kopplung durch einen Formschluss ist auch die Kopplung über einen Kraftschluss möglich, wenn beispielsweise ein Schaltring auf den Hohlrädern angeordnet werden kann und durch Verringerung des Durchmessers des Schaltringes jeweils eine kraftschlüssige Verbindung mit einem Hohlrad hergestellt wird.

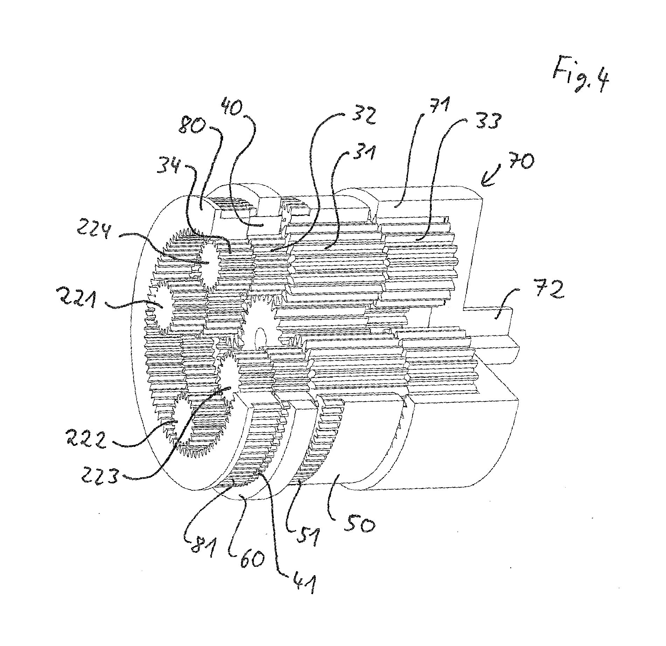

Die Fig. 4 zeigt eine perspektivische Ansicht eines weiteren Getriebes gemäss einem vierten Ausführungsbeispiel der Erfindung, welches ebenfalls ein dreigängiges Getriebe darstellt, wobei vier Planetenstangen 221, 222, 223 und 224 in einem Winkel von 90 Grad zueinander um das Sonnenrad 11 angeordnet sind, welches Sonnenrad 11 nur mit dem Planetenradabschnitt 31 der Stangen 221, 222, 223 und 224 kämmt. Diese weisen jeweils die aus dem dritten Ausführungsbeispiel bekannten Planetenradabschnitte 31, 32, 33 und 34 auf. Der Schaltring 60, der in die Aussenverzahnung 41, 51 beziehungsweise 81 der Hohlräder 40, 50 beziehungsweise 80 eingreifen kann, steht hier im Eingriff mit dem Rad 40, so dass die Hohlräder 50 und 80 beim Betrieb des Getriebes frei mitdrehen.

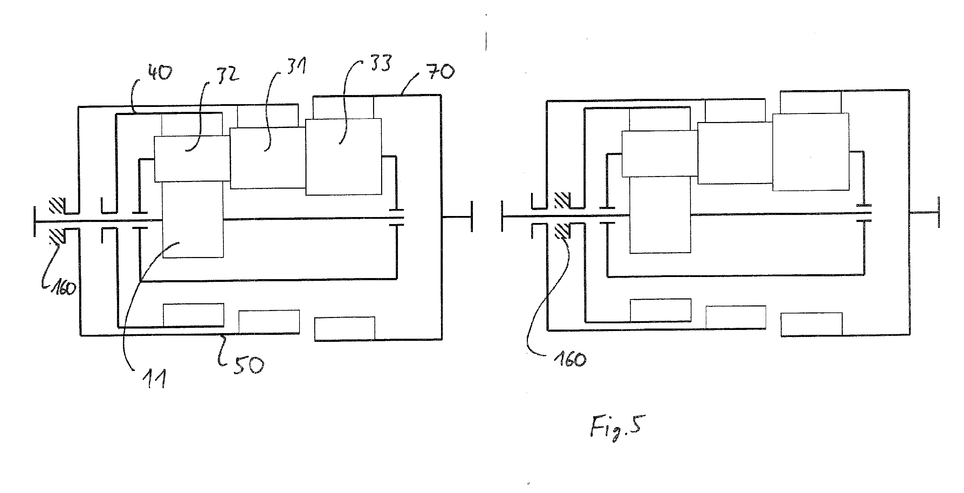

Die Fig. 5 zeigt nebeneinander zwei schematische Darstellungen von zwei Schaltpositionen eines Getriebes gemäss einem Ausführungsbeispiel der Erfindung. Dieses Schema kann bei einem Einsatz von beispielsweise drei oder vier Planetenstangen verwendet werden. Jede Planetenstange weist die drei Planetenradabschnitte 31, 32, 33 auf, wobei das Sonnenrad 11 mit dem Abschnitt 32 kämmt, was einen Unterschied zu den Ausführungen in beispielsweise Fig. 3 und 4 darstellt. Mit dem Bezugszeichen 160 ist das Schaltelement bezeichnet, welches hier in achsennaher Darstellung entweder das Hohlrad 40 oder das Hohlrad 50 blockiert. Aus der Zeichnung ist auch klar ersichtlich, dass das Hohlrad 70 in der Darstellung wahlweise entweder mit der Antriebsachse oder der Abtriebsachse verbunden ist. Es ist auch klar, dass das Sonnenrad 11 bei geeigneter Auslegung mit einem beliebigen der Abschnitte 31, 32, 33 und sofern vorhanden 34 etc. verbunden sein kann.

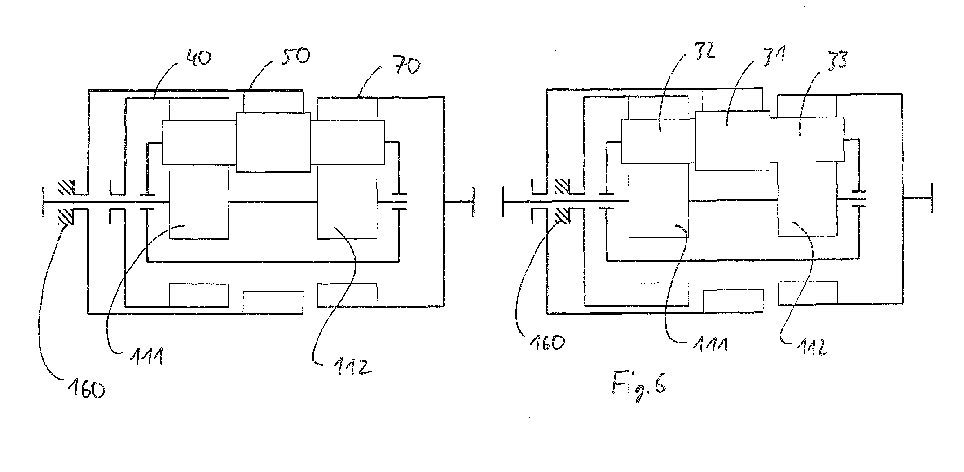

In diesem Sinne stellt die Fig. 6 nebeneinander zwei schematische Darstellungen von zwei Schaltpositionen eines weiteren Getriebes gemäss einem Ausführungsbeispiel der Erfindung mit einer geteilten Sonne 111 und 112 dar, die über einen Abschnitt verbunden sind. Der Begriff geteiltes Sonnenrad ist gewählt, weil es mit den äusseren Planetenradabschnitten 32 und 33 im Eingriff steht, aber nicht mit dem mittleren 31. Es sind natürlich auch andere Kombinationen für den Fachmann ersichtlich. Die Übersetzungen 111 mit 32 und 112 mit 33 weisen dabei die gleiche Übersetzung auf, wobei sich die Module unterscheiden können.

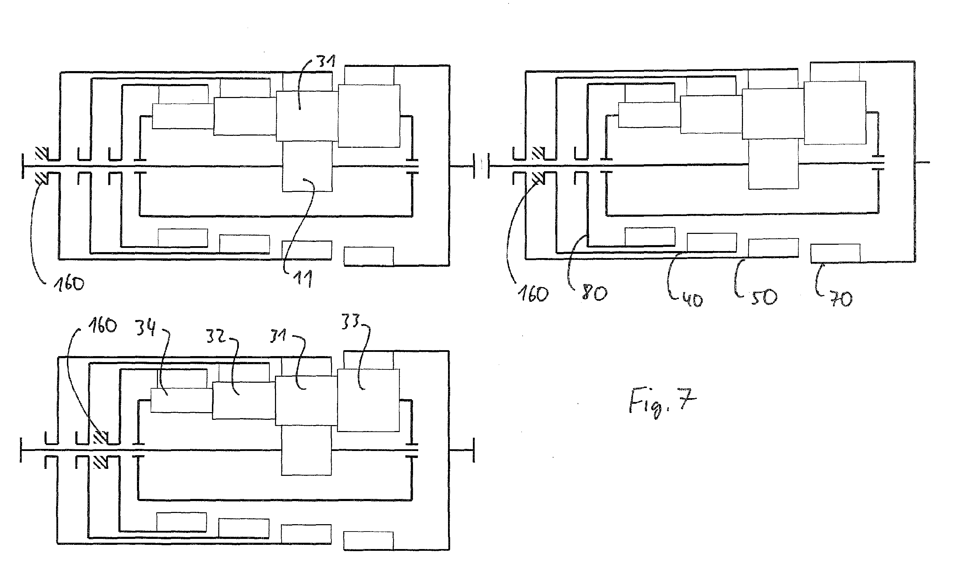

Die Fig. 7 zeigt eine schematische Darstellung der drei Schaltpositionen eines dreigängigen Getriebes gemäss einem Ausführungsbeispiel der Erfindung. Die hier vier unterschiedlichen Planetenradabschnitte 31, 32, 33, 34 jeder Planetenstange stehen hier mit den Innenverzahnungen der Hohlräder 80, 40, 50 bzw. 70 im Eingriff. Es ist ein Sonnenrad 11 dargestellt, welches mit dem Planetenradabschnitt 31 kämmt, wobei für den Fachmann klar ist, dass dieses auch bei anderer Auslegung mit einem der anderen Planetenradabschnitte kämmen könnte. Mit dem Schaltelement 160 ist jeweils eines der Hohlräder 40, 50 bzw. 80 blockierbar, wobei der Eingriff durch einen Formschluss oder Kraftschluss realisierbar ist.

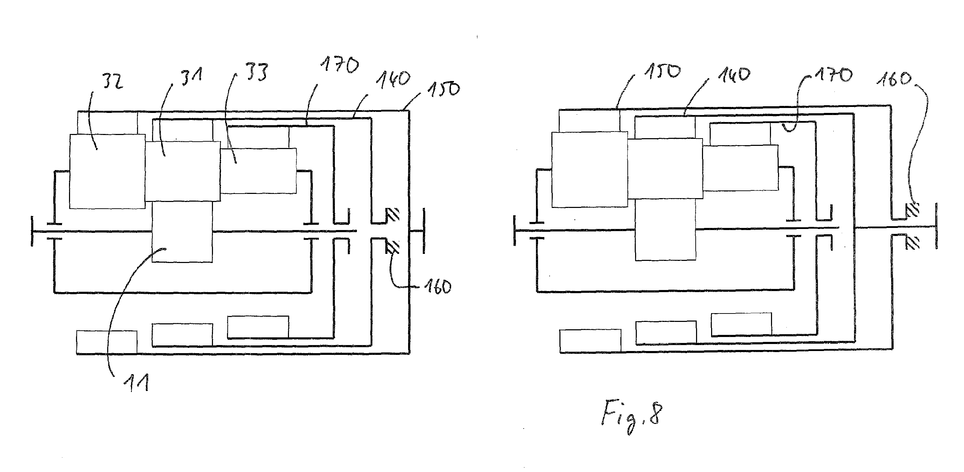

Die Fig. 8 zeigt eine schematische Darstellung von links- beziehungsweise rechtsdrehendem Abtrieb gemäss einem weiteren Ausführungsbeispiel der Erfindung. Die drei Planetenradabschnitte 31, 32 und 33 stehen hier mit anders montierten Hohlrädern 140, 150 und 170 in Verbindung. Entweder wird das Hohlrad 140 beziehungsweise das Hohlrad 150 blockiert und das jeweils andere Hohlrad bildet den Abtriebsstrang. Damit ist das Getriebe rechtsdrehend beziehungsweise linksdrehend mit identischer Übersetzung. Das Hohlrad 170 kämmt in beiden Fällen frei drehend mit dem dritten Planetenradabschnitt. Weitere recht- bzw. linksdrehende Übersetzungen werden erreicht, indem Hohlrad 170 bzw. 150 steht oder den Abtrieb bildet und 140 jeweils frei dreht oder indem Hohlrad 170 bzw. 140 steht oder den Abtrieb bildet und 150 jeweils frei dreht.

| steht | Abtrieb | kämmt frei | Übersetzung | Richtung |
|---|---|---|---|---|
| 150 | 140 | 170 | i1 | rechts |
| 140 | 150 | 170 | i1 | links |
| 140 | 170 | 150 | i2 | rechts |
| 170 | 140 | 150 | i2 | links |
| 150 | 170 | 140 | i3 | rechts |
| 170 | 150 | 140 | i3 | links |

In Fig. 8 ist also die Situation dargestellt, bei der der Kraftfluss immer über die Abschnitte 31 und 32 erfolgt. Durch den Wechsel von Situation "Abtrieb 150 - gehaltenes Hohlrad 140" zu "Abtrieb 140 - gehaltenes Hohlrad 150" erfolgt eine Drehrichtungsumkehr, bei der die Übersetzung erhalten bleibt. Es ist klar, dass eine andere Übersetzung - ebenfalls mit einer Richtungsumkehr erfolgen kann, wenn der Kraftfluss über Abschnitte 31 und 33 geht, und damit über Hohlräder 140 und 170, oder umgekehrt. In allen Fällen kann man sagen, dass eines der nicht im Eingriff mit einem Schaltmittel 160 stehenden Hohlräder den Abtrieb bildet.

Es ist klar, dass alle dargestellten Ausführungsbeispiele mit sich ergänzenden oder ähnlichen Merkmalen miteinander kombiniert werden können. So können drei oder vier Planetenstangen bei allen Ausführungsbeispielen nach den Fig. 5 bis 8 eingesetzt werden. Andersherum können die Schaltschemata der Fig. 5 bis 8 in Gestalt der Fig. 1 bis 4 umgesetzt werden; beispielsweise insbesondere die unterschiedliche Anordnung des Sonnenrades 11, die geteilte Sonne oder die Umkehrung der Richtung des Abtriebs.

Auch sind die Übersetzungen frei wählbar. Als nicht begrenzende Beispiele werden folgende Übersetzungen beschrieben. Dabei wird die Zähnezahl angegeben und Innenverzahnungen mit negativem Vorzeichen versehen.

### Beispiel 1 - zweigängiges Getriebe:

Sonne = 40; Hohlrad_1 = -100; Planetenabschnitt_1 = 30; Hohlrad_2 = -66; Planetenabschnitt_2 = 18; Hohlrad_3 - -67; Planetenabschnitt_3 = 20.

Der Abtrieb auf Hohlrad_1 beträgt bei festem Hohlrad_2 1:37.5, bei festem Hohlrad_3 1:702.5.

### Beispiel 2 - dreigängiges Getriebe:

Sonne = 40; Hohlrad_1 = -100; Planetenabschnitt_1 = 30; Hohlrad_2 = -66; Planetenabschnitt_2 = 18; Hohlrad_3 = -67; Planetenabschnitt_3 = 20; Hohlrad_4 = -80; Planetenabschnitt_4 = 16. Der Abtrieb auf Hohlrad_1 beträgt bei festem Hohlrad_2 1:37.5, bei festem Hohlrad_3 1:702.5 und bei festem Hohlrad_4 1:9.5.

### Bezugszeichenliste

- 10: Antriebskörper
- 11: Sonnenrad
- 20: Planeteneinheit
- 21, 22, 23, 24: Planetenstange
- 31: erster Planetenradabschnitt
- 32: zweiter Planetenradabschnitt
- 33: Abtriebs-Planetenradabschnitt
- 34: weiterer Planetenradabschnitt
- 40: zweites Hohlrad
- 41: Aussenverzahnung
- 50: erstes Hohlrad
- 51: erster Bereich mit Aussenverzahnung
- 52: zweiter Bereich ohne Aussenverzahnung
- 60: Schaltring
- 70: Abtriebskörper
- 71: zweites (Abtriebs-)Hohlrad
- 72: Abtriebsflansch
- 80: weiteres Hohlrad
- 81: Aussenverzahnung
- 111, 112: geteilte Sonne
- 140, 150, 170: Hohlrad
- 160: Schaltelement
- 121, 122, 123: Planetenstange
- 221, 222, 223, 224: Planetenstange
- 321, 322, 323: Planetenstange

## Patentansprüche

1. Wolfromgetriebe mit einem Antriebskörper (10, 11) und einem Abtriebskörpers (70), mit zwei axial benachbarten ersten und zweiten Hohlrädern (50, 71) und mit mindestens zwei Planetenstangen (21-24; 121-123; 221-224; 321-323), wobei die Planetenstangen mit einem ersten axialen Bereich (31) in einem innerhalb des Getriebegehäuses festsetzbaren ersten Hohlrad (50) und mit einem zweiten axialen Bereich (33) in dem drehbaren zweiten Hohlrad (71) kämmen und wobei mindestens ein Abschnitt (31, 32, 33, 34) der Planetenstangen mit einem Sonnenrad (11) kämmt**, dadurch gekennzeichnet, dass** die Planetenstangen (21-24; 121-123; 221-224; 321-323) einen dritten axialen Bereich (32) aufweisen, der mit einem dritten Hohlrad (40) kämmt, und dass Schaltmittel (60, 160) vorgesehen sind, um alternativ zu dem ersten Hohlrad (50) ein anderes Hohlrad (40, 70) gegenüber dem Getriebegehäuse drehfest festzusetzen.

2. Wolfromgetriebe nach Anspruch 1, **dadurch gekennzeichnet, dass** drei oder vier Planetenstangen vorgesehen sind, wobei die Planetenstangen untereinander identisch ausgestaltet sind, wobei die Planetenstangen in regelmässigem Winkelabstand zueinander um die Achse des Sonnenrades angeordnet sind.

3. Wolfromgetriebe nach Anspruch 1 oder 2**, dadurch gekennzeichnet, dass** jeder der Planetenräderabschnitte (31, 32, 33, 34) gleich viele, halb so viele oder doppelt so viele Zähne hat wie ein anderer der Planetenräderabschnitte (31, 32, 33, 34) aufweist.

4. Wolfromgetriebe nach einem der Ansprüche 1 bis 3, **dadurch gekennzeichnet, dass** ein viertes Hohlrad (80) vorgesehen, welches mit einem vierten axialen Bereich (34) der Planetenstangen kämmt.

5. Wolfromgetriebe nach einem der Ansprüche 1 bis 4, **dadurch gekennzeichnet, dass** das Sonnenrad (11; 111, 112) mit einem oder mehreren, vorbestimmten, einem beliebigen der Hohlräder (40, 50, 70, 80) zugeordneten Abschnitt (31 bis 34) der Planetenstangen kämmt.

6. Wolfromgetriebe nach einem der Ansprüche 1 bis 5, **dadurch gekennzeichnet, dass** zwischen den Abschnitten (31, 32, 33 und 34) der einzelnen Planetenstangen der Winkelversatz zwischen den Zähnen gleich 0 ist.

7. Wolfromgetriebe nach einem der Ansprüche 1 bis 6, **dadurch gekennzeichnet**, das die in mehr als einer Getriebestufe Last einleitenden Sonnenräder identische Zähnezahlen und identische Module aufweisen und deren Winkelversatz zwischen den Zähnen gleich 0 ist.

8. Wolfromgetriebe nach einem der Ansprüche 1 bis 7, **dadurch gekennzeichnet, dass** Antriebskörper und Abtriebskörper vertauscht sind, so dass das Sonnenrad mit dem Abtriebskörper verbunden ist.

9. Wolfromgetriebe nach einem der Ansprüche 1 bis 7, **dadurch gekennzeichnet, dass** mindestens zwei der Hohlräder (40, 50, 70) eine geringfügig unterschiedliche Zähnezahl besitzen.

10. Wolfromgetriebe nach einem der Ansprüche 1 bis 9, **dadurch gekennzeichnet, dass** das Schaltmittel ein Schaltring (60) ist, der in eine Aussenverzahnung der Hohlräder eingreift.

11. Wolfromgetriebe nach einem der Ansprüche 1 bis 9, **dadurch gekennzeichnet, dass** das Schaltmittel aus Elementen (160) besteht, die im Kraftschluss oder Formschluss in die Hohlräder eingreifen können.

12. Wolfromgetriebe nach Anspruch 11, **dadurch gekennzeichnet, dass** ein nicht im Eingriff mit einem Schaltmittel (160) stehendes Hohlrad den Abtrieb bildet.
